(19) Europäisches Patentamt
European Patent Office
Office européen des brevets

(11) **EP 2 301 289 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(21) Anmeldenummer: **10747574.1**

(22) Anmeldetag: **19.05.2010**

(51) Int Cl.:
***H04W 64/00*** (2009.01)        ***G01S 5/02*** (2006.01)
*G01S 5/10* (2006.01)        *H04W 84/04* (2009.01)

(86) Internationale Anmeldenummer:
**PCT/DE2010/075041**

(87) Internationale Veröffentlichungsnummer:
**WO 2010/133225 (25.11.2010 Gazette 2010/47)**

(54) **VERFAHREN ZUR STANDORTABHÄNGIGEN AKTIVIERUNG EINER FEMTOZELLE**

METHOD FOR LOCATION DEPENDENT ACTIVATION OF A FEMTOCELL

PROCÉDÉ D'ACTIVATION D'UNE FEMTOCELLULE DÉPENDANT DU LIEU

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**RS**

(30) Priorität: **20.05.2009 DE 102009025851**

(43) Veröffentlichungstag der Anmeldung:
**30.03.2011 Patentblatt 2011/13**

(73) Patentinhaber: **Deutsche Telekom AG**
**53113 Bonn (DE)**

(72) Erfinder:
• **BREITBACH, Markus**
**53227 Bonn (DE)**
• **RÖBKE, Matthias**
**50859 Köln (DE)**

(74) Vertreter: **Bucher, Ralf Christian**
**Patentanwalt Dipl.-Ing.**
**Alte Landstrasse 23**
**85521 Ottobrunn (DE)**

(56) Entgegenhaltungen:
WO-A2-02/063865        DE-A1- 10 314 169
US-A- 5 758 288         US-A1- 2009 092 096
US-A1- 2009 322 603

**Beschreibung**

Die Erfindung betrifft ein Verfahren zur Standortüberprüfung einer Femtozelle gemäß Anspruch 1 und 2, eine Femtozelle gemäß Anspruch 10 und eine Steuer- und Kontrollinstanz eines Mobilfunknetzes gemäß Anspruch 11.

In Mobilfunknetzen der zweiten (GSM) und der dritten Generation (UMTS) sowie von nachfolgen Generationen sind Funkzellen klassischerweise funktionale Einheiten, welche durch einen Anbieter von Mobilfunkleistungen betrieben werden.

Neue Betreiberkonzepte ändern dieses Paradigma. Durch die Einführung von Kleinst-Funkzellen, den so genannten Femtozellen, ist es denkbar, dass eine private Funkzelle durch den Kunden des Mobilfunkanbieters betrieben wird. Die Femtozelle wird durch eine kleine Sende- und Empfangsanlage bereitgestellt, welche Mobilfunkverbindungen in der Femtozelle ermöglicht. Im Folgenden wird der Begriff Femtozelle mit einer Sende- und Empfangsanlage bzw. einer Femtobasisstation (in Analogie zu einer Mobilfunkbasisstation) gleichgesetzt.

Eine charakteristische Eigenschaft einer Femtozelle wird in erster Linie durch die abgegebene Sendeleistung bestimmt, welche die Größe der mit Mobilfunk versorgten Zelle maßgeblich beeinflusst. Einschränkungen hinsichtlich der erlaubten Nutzer in der Zelle sind ebenfalls möglich.

Eine Femtozelle wird ergänzend in ein öffentliches Mobilfunknetz eingebunden. Die Anbindung an das Netzwerk eines Mobilfunkanbieters erfolgt insbesondere über einen Breitbandnetzanschluss mit den entsprechenden Kontroll- und Steuerinstanzen des Mobilfunkbetreibers, so dass der Nutzer von Mobilfunkdiensten die gleiche Netzqualität im Bereich der Femtozellenversorgung erfährt, wie er sie aus dem übergeordneten "Makronetz" des Anbieters gewohnt ist.

Sowohl aus regulatorischen Gründen als auch aus Netzökonomie- und Sicherheitsgründen ist es zwingend notwendig, dass der Mobilfunkbetreiber genaue Kenntnis über den Standort der Femtozelle hat. Weiterhin ist es beispielsweise bei Notrufen notwendig, den Aufenthaltsort des Anrufers einzugrenzen.

Eine Möglichkeit, den Standort einer Femtozelle zu bestimmen, besteht in der Detektion umliegender Makrozellen des Mobilfunkbetreibers, mit Hilfe von deren Kennung eine ungefähre Positionsbestimmung angelehnt werden könnte. Ein Verfahren zur Positionsbestimmung einer mobilen Station anhand von Signalen von Basisstationen ist aus der DE 103 14 169 A1 bekannt. Dieses Verfahren kann jedoch nur in Bereichen angewandt werde, in denen eine Funkversorgung über das Makronetz gegeben ist. Eine Versorgung von derzeit unversorgten Bereichen ist somit nicht möglich.

Eine andere Möglichkeit besteht darin, über die Bestimmung des physikalischen Breitbandanschlusses des Nutzers bzw. Betreibers einer Femtozelle den Standort der Femtozelle zu bestimmen. Dies kann jedoch einfach umgangen werden, indem der Nutzer die Datenströme aus der Femtozelle zunächst zu seinem Heimnetz leitet und von dort aus weiter ins Internet. Da der Verbindungsaufbau zu den Steuer- und Kontrollinstanzen des Mobilfunkanbieters dann über die IP Adresse des Breitbandanschlusses läuft, erhält dieser eine falsche oder ungenaue Ortsinformation.

US 2009/092096 A1 betrifft die automatische Konfiguration einer Femtozelle, bei dem die Femtozelle erste Information wie beispielsweise eine Standortinformation oder Signalmessinformationen an einen Dienstanbieter beispielsweise über ein IP-Netzwerk überträgt und zweite Informationen vom Dienstanbieter empfängt, die Betriebsparameter für die Femtozelle umfassen. Die Femtozelle kann eine Standortinformation durch Kommunikation mit einer benachbarten Makrobasisstation oder mehreren benachbarten Basisstationen oder mittels eines GPS-Empfängers ermitteln.

US 5 758 288 A beschreibt ein Verfahren zur Positionsbestimmung von zellularen Mobiltelefonen, die Entfernungssignale empfangen, die von Transceivern mit fester Position übertragen werden. Die Telefone bestimmen entweder den Zeitunterschied des Empfangs oder die absoluten Empfangszeiten der Entfernungssignale, um ihre Positionen zu ermitteln.

Aus US 2009/322603 A1 gehen ein Ortungs-Verfahren und -System hervor, die Frequenz-modulierte (FM) Rundfunksignale verwenden. Hierbei werden von einem oder mehreren Empfängern FM-Stereosignale von drei FM-Stationen empfangen. Jedes FM-Stereosignal umfasst jeweils einen modulierten 19 kHz FM-Pilot-Ton. Eine geographische Position wird bei jedem Empfänger basierend auf einer Phasendifferenz der demodulierten Pilot-Töne bestimmt, die in den empfangenen FM-Signalen enthalten sind.

Aufgabe der vorliegenden Erfindung ist es daher, die Standortüberprüfung einer Femtozelle zu verbessern.

Diese Aufgabe wird durch ein Verfahren zur Standortüberprüfung einer Femtozelle mit den Merkmalen von Anspruch 1 bzw. 2 sowie durch eine Femtozelle mit den Merkmalen von Anspruch 10 und eine Steuer- und Kontrollinstanz eines Mobilfunknetzes mit den Merkmalen von Anspruch 11 gelöst. Weitere Ausgestaltungen der Erfindung ergeben sich aus den abhängigen Ansprüchen.

Ein wesentlicher Gedanke der Erfindung besteht darin, dass zur Standortüberprüfung einer Femtozelle Laufzeitdifferenzen von Funksignalen beliebiger Sender mit bekannten Standorten ermittelt und ausgewertet werden, die am Standort der Femtozelle und am bekannten Standort eines Referenzempfängers empfangen werden können. Die Sender können Rundfunksender oder Funksender sein, die spezielle Pilotfunksignale mit hoher Reichweite zur Standortüberprüfung abstrahlen. Der spezielle Pilotfunksignale abstrahlende Funksender kann ein eigens zur Abstrahlung dieser Signale vorgesehener Sender oder auch ein Rundfunksender sein, der zusätzlich zu herkömmlichen Rundfunksignalen auch die Pilotfunksignale abstrahlt. Ein für die Zwecke der vorliegenden Erfindung geeigneter Rundfunksender kann beispielsweise ein Sender sein, der analoge und/oder digitale Rundfunksignale abstrahlt, beispielsweise DVB-T- oder analoge Rundfunksignale mit eingebetteten digitalen RDS (Radio Data System)-Daten. Hierdurch kann mit relativ hoher Genauigkeit der Standort einer Femtozelle vor allem in mit Mobilfunk schlecht versorgten, insbesondere unterversorgten Gebieten wie beispielsweise in Gebäuden überprüft und für die Aktivierung eines Funkteils der Femtozelle zur Funkversorgung herangezogen werden.

Eine Ausführungsform der Erfindung betrifft ein Verfahren zur Standortüberprüfung einer Femtozelle mit den folgenden Schritten: Empfangen von Funksignalen von mindestens drei Sendern mit bekannten Standorten jeweils durch die Femtozelle und durch einen Referenzempfänger mit bekanntem Standort,
Ermitteln der Laufzeitdifferenzen der Funksignale von jeweils zwei der mindestens drei Sender anhand der Empfangszeitpunkte der durch die Femtozelle und den Referenzempfänger empfangenen Funksignale, und Überprüfen des Standorts der Femtozelle abhängig von den ermittelten Laufzeitdifferenzen.

Ein Sender kann ein Rundfunksender oder ein Pilotfunksignalsender sein, der ein Pilotfunksignal zur Standortüberprüfung einer Femtozelle in einem Frequenzbereich abstrahlt, der außerhalb der für Mobilfunk genutzten Frequenzbereiche liegt.

Das Ermitteln der Laufzeitdifferenzen der Funksignale kann folgende Schritte umfassen:

Ermitteln der Empfangszeitpunkte der durch die Femtozelle, und den Referenzempfänger empfangenen Funksignale,
Berechnen von Zeitunterschieden anhand der Empfangszeitpunkte, Berechnen von Zeitdifferenzen anhand der Zeitunterschiede, und
Ermitteln der Laufzeitdifferenzen der Funksignale der Funksender zur Femtozelle anhand der Zeitdifferenzen und der anhand des bekannten Standorts des Referenzempfängers und der bekannten Standorte der Sender der Funksignale ermittelten Signallaufzeiten der Funksignale von den Funksendern zum Referenzempfänger.

Das Überprüfen des Standorts der Femtozelle abhängig von den ermittelten Laufzeitdifferenzen kann insbesondere folgende Schritte umfassen:

Bilden von Zeitdifferenzen anhand von Zeitunterschieden aus der Menge der ermittelten Zeitunterschiede, wobei zwei zum Bilden einer Zeitdifferenz verwendete Zeitunterschiede die Zeitunterschiede der Empfangszeitpunkte der Funksignale sind, die von den gleichen zwei der mindestens drei Sender abgestrahlt und einmal durch die Femtozelle, und einmal durch den Referenzempfänger empfangen wurden, und
Ermitteln eines einer gebildeten Zeitdifferenz zugeordneten Abstandsbereichs zu den Sendern, deren Funksignale für das Bilden der Zeitdifferenz verwendet wurden, für jede gebildete Zeitdifferenz, und
Überprüfen des Standorts der Femtozelle anhand von den ermittelten Abstandsbereichen.

Das Überprüfen des Standorts der Femtozelle anhand von den ermittelten Abstandsbereichen kann folgende Schritte aufweisen:

Bestimmen eines Überschneidungsbereichs der ermittelten Abstandsbereiche als Bereich für mögliche Standorte der Femtozelle, und
Überprüfen des Standorts der Femtozelle anhand des Überschneidungsbereichs.

Das Ermitteln der Laufzeitdifferenzen der Funksignale von jeweils zwei der mindestens drei Sender und das Überprüfen des Standorts der Femtozelle abhängig von den ermittelten Laufzeitdifferenzen kann durch eine Steuer- und Kontrollinstanz eines Mobilfunknetzes erfolgen, wobei anhand der Empfangszeitpunkte der durch die Femtozelle und den Referenzempfänger empfangenen Funksignale ermittelte Zeitunterschiede von der Femtozelle und vom Referenzempfänger für das Überprüfen des Standorts der Femtozelle an die Steuer- und Kontrollinstanz übermittelt werden und/oder die lokalen Empfangszeitpunkte von Funksignalen durch die Femtozelle und den Referenzempfänger an die Steuer- und Kontrollinstanz übermittelt werden. Die Steuer- und Kontrollinstanz kann manipulationssicher von einem Mobilfunknetzbetreiber beispielsweise in Form eines speziellen Femtozellen-Freigabeservers betrieben werden. Die Femtozelle selbst muss zudem keine aufwendige Standortüberprüfung durchführen.

Das Ermitteln der Laufzeitdifferenzen der Funksignale von jeweils zwei der mindestens drei Sender und das Überprüfen des Standorts der Femtozelle abhängig von den ermittelten Laufzeitdifferenzen kann auch durch die Femtozelle selbst erfolgen, wobei anhand der Empfangszeitpunkte der durch den Referenzempfänger empfangenen Funksignale ermittelte Zeitunterschiede vom Referenzempfänger für das Überprüfen des Standorts der Femtozelle an die Femtozelle übermittelt werden und/oder die vom Referenzempfänger ermittelten Empfangszeitpunkte der durch den Referenzempfänger empfangenen Funksignale für das Überprüfen des Standorts der Femtozelle an die Femtozelle übermittelt werden. In diesem Fall kann die Femtozelle sozusagen autonom die Funkversorgung aufnehmen, wodurch ein Mobilfunknetzbetreiber keine weitere Infrastruktur außer ggf. dem Referenzempfänger vorhalten muss. Beispielsweise kann die Firmware der Femtozelle zum Durchführen einer Standortüberprüfung gemäß der Erfindung ausgebildet sein.

Schließlich kann das Ermitteln der Laufzeitdifferenzen der Funksignale von jeweils zwei der mindestens drei Sender und das Überprüfen des Standorts der Femtozelle abhängig von den ermittelten Laufzeitdifferenzen auch durch eine Steuer- und Kontrollinstanz eines Mobilfunknetzes erfolgen, wobei die lokalen Empfangszeitpunkte von Funksignalen durch die Femtozelle und den Referenzempfänger an die Steuer- und Kontrollinstanz übermittelt werden. In diesem Fall ist der technische Aufwand zum Implementieren des erfindungsgemäßen Verfahrens in der Femtozelle sehr gering, da lediglich die Möglichkeit zum Empfangen der Funksignale der Sender und zum Messen der Empfangszeitpunkte sowie zum Übermitteln dieser Daten an die Steuer- und Kontrollinstanz vorgesehen sein muss.

Das Verfahren kann ferner durch den folgenden Schritt gekennzeichnet sein: Ermitteln, ob der Standort der Femtozelle einem oder mehreren geplanten Standorten der Femtozelle entspricht, und davon abhängig Aktivieren einer Mobilfunkversorgung durch die Femtozelle innerhalb des von der Femtozelle abgedeckten Bereichs. Hierdurch wird eine Kontrolle des Betriebs der Femtozelle abhängig von deren Standort ermöglicht, wodurch Manipulationen wie in der Einleitung erwähnt erschwert, wenn nicht sogar weitgehend vermieden können.

Die Mobilfunkversorgung kann durch die Femtozelle insbesondere dann aktiviert werden, wenn der Standort etwa einem geplanten Standort der Femtozelle entspricht.

Das Verfahren kann zyklisch wiederholt werden, um Standortveränderungen der Femtozelle berücksichtigen zu können.

Der Referenzempfänger kann durch eine Referenz-Femtozelle gebildet werden, deren Standort bekannt ist.

Insbesondere kann die Referenz-Femtozelle an einer Makrobasisstation eines Mobilfunknetzes lokalisiert sein, insbesondere an der Makrobasisstation montiert sein.

Eine weitere Ausführungsform der Erfindung betrifft eine Femtozelle, die zum Einsatz mit einem Verfahren nach der Erfindung und wie vorhergehend beschrieben ausgebildet ist und ferner ausgebildet ist zum Empfangen von Funksignalen von mindestens drei Sendern mit bekannten Standorten.

Weiter kann die Femtozelle ausgebildet sein zum Ermitteln der Laufzeitdifferenzen der Funksignale von jeweils zwei der mindestens drei Sender.

Die Femtozelle kann ferner ausgebildet sein

- zum Übertragen von Zeitunterschieden zwischen Ernpfangszeitpunkten von empfangenen Funksignalen abhängig von den auf Basis der Zeitunterschiede ermittelten Laufzeitdifferenzen an eine Steuer- und Kontrollinstanz eines Mobilfunknetzes, und/oder
- zum Übertragen der lokalen Empfangszeitpunkte von Funksignalen abhängig von den auf Basis von Zeitunterschieden der Empfangszeitpunkte ermittelten Laufzeitdifferenzen an eine Steuer- und Kontrollinstanz eines Mobilfunknetzes.

Weiterhin kann die Femtozelle ferner ausgebildet sein

- zum Empfangen der vom Referenzempfänger gemessenen Empfangszeitpunkte von Funksignalen zum Überprüfen des Standorts der Femtozelle oder der daraus ermittelten Zeitunterschiede,
- zum Überprüfen ihres Standorts abhängig von den ermittelten Laufzeitdifferenzen.

Schließlich kann die Femtozelle ferner ausgebildet sein

- zum Ermitteln, ob ihr Standort einem oder mehreren geplanten Standorten der Femtozelle entspricht, und
- davon abhängig zum Aktivieren einer Mobilfunkversorgung durch die Femtozelle innerhalb des von der Femtozelle abgedeckten Bereichs.

Weiterhin betrifft eine Ausführungsform der Erfindung eine Steuer- und Kontrollinstanz eines Mobilfunknetzes, die zum Einsatz mit einem Verfahren nach der Erfindung und wie vorhergehend beschrieben, insbesondere zur Standortüberprüfung der Femtozelle und zum Übermitteln eines Freigabekodes für die Aktivierung des Funkteils der Femtozelle an die Femtozelle abhängig von der Standortüberprüfung ausgebildet ist.

Weitere Vorteile und Anwendungsmöglichkeiten der vorliegenden Erfindung ergeben sich aus der nachfolgenden Beschreibung in Verbindung mit dem in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in

Fig. 1 eine Anordnung von drei ortfesten Sendern mit bekannten Standorten, einem Referenzempfänger und einer Femtozelle, deren Standort gemäß der Erfindung bestimmt werden soll;

Fig. 2 und 3 Diagramme mit Hyperbeln, die durch Auswertung von Laufzeiten und Laufzeitdifferenzen gemäß der Erfindung zur Standortüberprüfung einer Femtozelle ermittelt wurden; und

Fig. 4 ein Flussdiagramm eines Ausführungsbeispiels des erfindungsgemäßen Verfahrens zur Standortüberprüfung einer Femtozelle

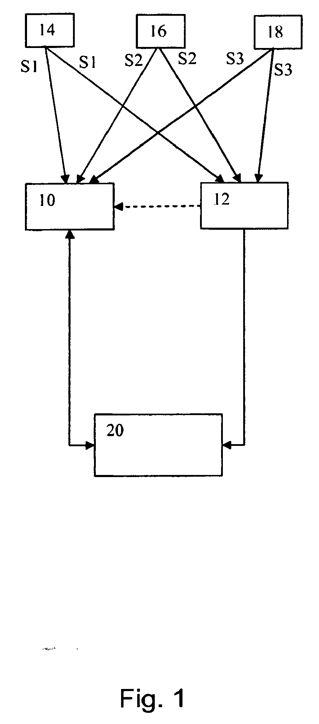

Im Folgenden wird die Erfindung anhand des in Fig. 1 dargestellten Ausführungsbeispiels mit drei ortsfesten Funksendern erläutert. Fig. 1 zeigt eine Femtobasisstation bzw. Femtozelle 10, deren Position ermittelt werden soll, sowie einen Referenzempfänger 12, die Funksignale von drei Funksendern 14, 16, und 18 empfangen, die von unterschiedlichen geographischen Orten senden. Die geographischen Orte bzw. Standorte der drei Funksender 14, 16 und 18 sind grundsätzlich bekannt. Ebenso ist der Standort des Referenzempfängers 12 bekannt. Bei den Funksendern kann es sich um Rundfunksender oder Pilotfunksignalsender handeln, die spezielle Pilotfunksignale , mit hoher Reichweite zur Standortüberprüfung abstrahlen, die zur Standortüberprüfung für Femtozellen vorgesehen sind. Weiterhin ist die Femtozelle 10 beispielsweise über einen drahtgebundenen Breitbandinternetanschluss mit einer Steuer- und Kontrollinstanz 20 eines Mobilnetzbetreibers kommunikationsmäßig verbunden. Über diese Verbindung kann die Femtozelle 10 mit der Steuer- und Kontrollinstanz 20 Daten austauschen und insbesondere einen Freigabekode von der Steuer- und Kontrollinstanz 20 empfangen, der es ihr ermöglicht, ihre Mobilfunkversorgung zu aktivieren. Der Referenzempfänger 12 kann ebenfalls mit der Steuer- und Kontrollinstanz 20 des Mobilnetzbetreibers kommunikationsmäßig und/oder mit der Femtozelle 10 (gestrichelte Verbindung) verbunden sein. Datenkommunikation zwischen der Femtozelle 10 bzw. dem Referenzempfänger 12 und der Steuer- und Kontrollinstanz 20 erfolgt verschlüsselt, um möglichen Missbrauch zu vermeiden, insbesondere um ein Abhören des Freigabekodes zu verhindern.

Sowohl die Femtozelle bzw. -basisstation 10 als auch der Referenzempfänger 12 ermitteln wie im Folgenden beschrieben die Empfangszeitpunkte von Funksignalen, die von den Funksendern 14, 16 und 18 insbesondere periodisch oder kontinuierlich ausgestrahlt werden. In ein von einem Funksender ausgestrahlten Signal kann beispielsweise eine Senderkennung und der Sendezeitpunkt kodiert sein, so dass ein Empfänger feststellen kann, von welchem Funksender des empfangene Signal stammt, und zu welcher Uhrzeit es ausgesandt wurde. Anstelle oder zusätzlich zu einer Kodierung eines Sendezeitpunkts in ein Funksignal können auch fest vorgegebene Sendezeitpunkte vorgesehen sein, beispielsweise Rahmenstrukturen von digitalen Sendesignalen. Die Rahmenstruktur eines digitalen Signals kann genutzt werden, indem ein Sendezeitpunkt eines Signals als der Beginn eines bestimmten Rahmens der Rahmenstruktur definiert wird, beispielsweise die Anfänge von Übertragungsrahmen in digitalen Signalen wie DVB-T oder digitaler RDS-Daten, die in analogen Hörfunksignalen eingebettet sind. Da sich der Empfänger des Signals auf die Rahmenstruktur synchronisieren muss, kann er auch den Beginn eines Übertragungsrahmens und eines den Sendezeitpunkt definierenden bestimmten Rahmens erkennen und durch Ablesen seiner Uhr den Empfangszeitpunkt ermitteln. Als ein den Sendezeitpunkt definierender bestimmter Rahmen kann beispielsweise ein Synchronisationsrahmen verwendet werden.Für den Synchronisationsvorgang sind in einem DVB-T-Signal sogenannte "Transmission Parameter Signalling (TPS) Pilots" vorgesehen, die für die Ermittlung des Empfangszeitpunkts ausgewertet werden können. Für die Synchronisation bei RDS-Daten ist in der EP 0 652 660 B1 ein Verfahren beschrieben. Die zeitlichen Abstände der vorgegebenen Sendezeitpunkte können so bemessen sein, dass die längste Funksignallaufzeit kürzer ist als der kürzeste vorgegebene Sendezeitpunktsabstand.

Um die Laufzeiten von Funksignalen von den Funksendern zur Femtobasisstation 10 und dem Referenzempfänger 12 zu ermitteln, weisen diese Uhren auf, die idealerweise nahezu synchron zu den Uhren der Funksender gehen, die für die in die Funksignale kodierten Sende-Uhrzeiten verwendet werden. Die Uhren können beispielsweise durch Funkuhren implementiert sein und/oder über die Kommunikationsverbindung mit der Steuer- und Kontrollinstanz mit den Uhren der Sender 14, 16 und 18 synchronisiert werden. Eine Synchronisation der Uhren zwischen Sender und Empfänger ist jedoch bei der vorliegenden Erfindung nicht erforderlich, da - wie im folgenden gezeigt wird - die Sende-Uhrzeiten bzw. Sendezeitpunkte eliminiert werden.

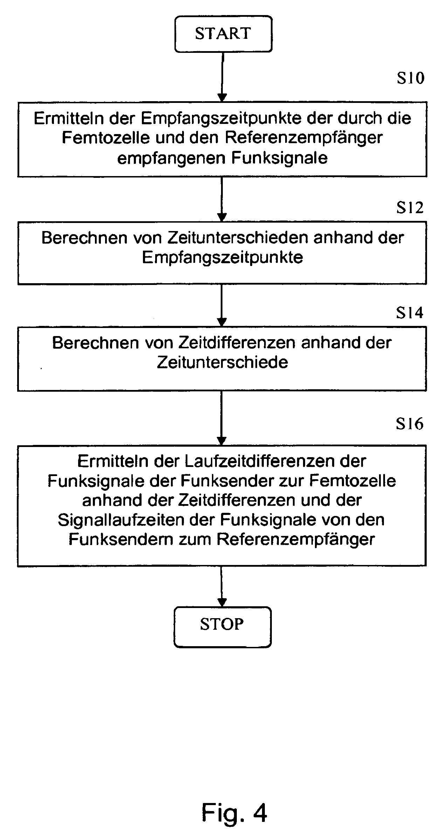

Im Folgenden wird nun anhand eines Ausführungsbeispiels das erfindungsgemäße Verfahren im Detail und unter Bezug auf das in Fig. 4 dargestellte Flussdiagramm eines Algorithmus zur Implementierung des erfindungsgemäßen Verfahrens erläutert.

Ein Funksignal S1, das vom Sender 14 zum Zeitpunkt $T_1$ ausgestrahlt wird, erreicht die Femtobasisstation 10 nach einer Signallaufzeit $t_1$ und den Referenzempfänger 12 nach einer Signallaufzeit $t_1'$. In der Regel sind die Uhren von Femtobasisstation 10 und Referenzempfänger 12 nicht miteinander synchronisiert, sondern weisen einen Offset $\Delta T$ bzw. $\Delta T'$ auf. Damit zeigen die Uhren von Femtobasisstation 10 bzw. Referenzempfänger 12 die Zeiten $T_{1e}=T_1+t_1+\Delta T$

bzw. $T_{1e}'=T_1+t_1'+\Delta T'$ (Index e steht für Empfangszeitpunkt, die Indices 1, 2, 3 bezeichnen die von den Sendern 14, 16 bzw. 18 abgestrahlten Signale S1, S2 bzw S3), wenn das von Sender 14 zum Zeitpunkt $T_1$ abgestrahlte Signal empfangen wird. In gleicher Weise ergibt sich, dass die Uhren von der Femtobasisstation 10 bzw. dem Referenzempfänger 12 die Zeiten $T_{2e}=T_2+t_2+\Delta T$ bzw. $T_{2e}'=T_2+t_2'+\Delta T'$ anzeigen, wenn ein vom Sender 16 zum Zeitpunkt $T_2$ abgestrahltes Signal S2 empfangen wird. Bei einem vom Sender 18 zum Zeitpunkt $T_3$ abgestrahltes Signal S3 zeigen die Uhren von Femtobasisstation 10 bzw. Referenzempfänger 12 die Zeiten $T_{3e}=T_3+t_3+\Delta T$ bzw. $T_{3e}'=T_3+t_3'+\Delta T'$ an. Insgesamt erfasst somit sowohl die Femtobasisstation 10 als auch der Referenzempfänger jeweils drei Empfangszeitpunkte $T_{1e}$ bzw. $T_{1e}'$, $T_{2e}$ bzw. $T_{2e}'$ und $T_{3e}$ bzw. $T_{3e}'$ beim Empfang der Funksignale S1, S2 und S3 von den drei Sendern 14, 16 und 18 (Schritt S10).

Die Femtobasisstation 10 und der Referenzempfänger 12 subtrahieren die erfassten Empfangszeitpunkte für die von den Sendern 14, 16 und 18 abgestrahlten Signale voneinander, um Zeitunterschiede zwischen den Empfangssignalen, d.h. den Funksignalen unterschiedlicher Sender zur Femtobasisstation 10 bzw. dem Referenzempfänger 12 zu berechnen (Schritt S12). In der Femtobasisstation 10 ergeben sich folgende Zeitunterschiede

$$T_{1e} - T_{2e} = \Delta T_{12} = T_1+t_1+\Delta T - (T_2+t_2+\Delta T) = T_1+t_1-T_2-t_2$$

$$T_{1e} - T_{3e} = \Delta T_{13} = T_1+t_1+\Delta T - (T_3+t_3+\Delta T) = T_1+t_1-T_3-t_3$$

$$T_{2e} - T_{3e} = \Delta T_{23} = T_2+t_2+\Delta T - (T_3+t_3+\Delta T) = T_2+t_2-T_3-t_3$$

Im Referenzempfänger 12 werden folgende Zeitunterschiede berechnet:

$$T_{1e}' - T_{2e}' = \Delta T_{12}' = T_1'+t_1'+\Delta T' - (T_2'+t_2'+\Delta T') = T_1'+t_1'-T_2'-t_2'.$$

$$T_{1e}' - T_{3e}' = \Delta T_{13}' = T_1'+t_1'+\Delta T' - (T_3'+t_3'+\Delta T') = T_1'+t_1'-T_3'-t_3'.$$

$$T_{2e}' - T_{2e}' = \Delta T_{23}' = T_2'+t_2'+\Delta T' - (T_3'+t_3'+\Delta T') = T_2'+t_2'-T_3'-t_3'.$$

Die so berechneten Zeitunterschiede $\Delta T_{12}$, $\Delta T_{12}'$, $\Delta T_{13}$, $\Delta T_{13}'$, $\Delta T_{23}$ und $\Delta T_{23}'$ werden von der Femtobasisstation 10 und dem Referenzempfänger 12 an die Steuer- und Kontrollinstanz 20 des Mobilfunknetzbetreibers zur weiteren Verarbeitung übertragen. Der Einfluss der Uhrenoffsets $\Delta T$ bzw. $\Delta T'$ ist in den Zeitunterschieden eliminiert. Die Berechnung der Zeitunterschiede kann auch von der Steuer- und Kontrollinstanz 20 durchgeführt werden, so dass die Femtozelle 12 und der Referenzempfänger lediglich die erfassten Empfangszeitpunkte für die von den Sendern 14, 16 und 18 abgestrahlten Signale an die Steuer- und Kontrollinstanz übertragen müssen.

Der Steuer- und Kontrollinstanz 20 sind die Standorte der Funksender und des Referenzempfängers bekannt. Daraus lassen sich die Signallaufzeiten $t_1'$, $t_2'$ und $t_3'$ errechnen. Durch Subtraktion der Zeitunterschiede $\Delta T_{12}$ und $\Delta T_{12}'$, $\Delta T_{13}$ und $\Delta T_{13}'$ bzw. $\Delta T_{23}$ und $\Delta T_{23}'$ und Einsetzen der Signallaufzeiten $t_1'$, $t_2'$ und $t_3'$ werden folgende Zeitdifferenzen berechnet (Schritt S14):

$$\Delta\tau_{12} = \Delta T_{12} - \Delta T_{12}' = T_1+t_1-T_2-t_2 - (T_1+t_1'-T_2-t_2') = t_1-t_2 - (t_1'-t_2').$$

$$\Delta\tau_{13} = \Delta T_{13} - \Delta T_{13}' = T_1+t_1-T_3-t_3 - (T_1+t_1'-T_3-t_3') = t_1-t_3 - (t_1'-t_3').$$

$$\Delta\tau_{23} = \Delta T_{23} - \Delta T_{23}' = T_2+t_2-T_3-t_3 - (T_2+t_3'-T_2-t_3') = t_2-t_3 - (t_2'-t_3').$$

Die Zeitdifferenzen $\Delta\tau_{12}$, $\Delta\tau_{13}$ und $\Delta\tau_{23}$ hängen nur von der Laufzeitdifferenz $t_1-t_2$ (bzw. $t_1-t_3$ bzw. $t_2-t_3$) der Signale der Funksender zur Femtobasisstation bzw. zum Referenzempfänger ab und sind unabhängig von den Sendezeitpunkten $T_1$, $T_1$ und $T_3$ sowie von den Uhrenoffsets $\Delta T$ bzw. $\Delta T'$. Die Laufzeitdifferenzen $t_1-t_2$ (bzw. $t_1-t_3$ bzw. $t_2-t_3$)

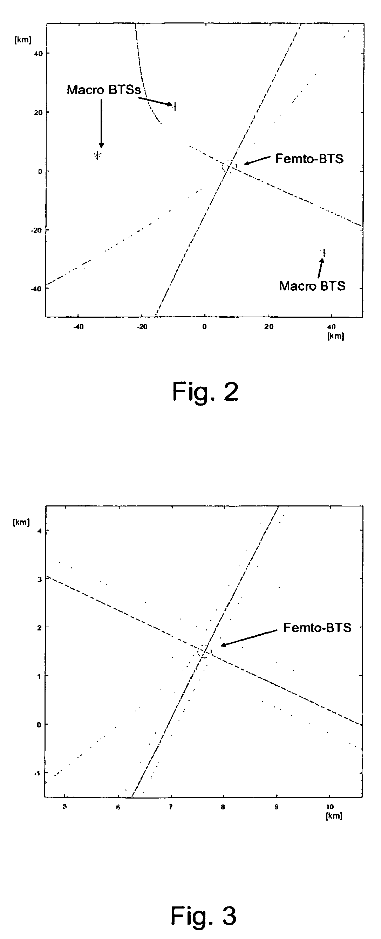

der Signale der Funksender zur Femtobasisstation 10 können daher anhand der Zeitdifferenzen $\Delta\tau_{12}$, $\Delta\tau_{13}$ und $\Delta\tau_{23}$ und der anhand des bekannten Standorts des Referenzempfängers 12 und der bekannten Standorte der Sender der Funksignale ermittelten Signallaufzeiten $t_1'$, $t_2'$ und $t_3'$ der Funksignale von den Funksendern zum Referenzempfänger ermittelt werden (Schritt S16). Unter der Annahme, dass sich die Funksignale auf direktem Weg ("line of sight") ausbreiten, bilden alle geographischen Orte mit der gleichen Laufzeitdifferenz $t_1$-$t_2$ (bzw. $t_1$-$t_3$ bzw. $t_2$-$t_3$) jeweils eine Hyperbel. D. h. die Position der Femtobasisstation 10 befindet sich auf einer Hyperbel, die durch die Laufzeitdifferenz $t_1$-$t_2$ (bzw. $t_1$-$t_3$ bzw. $t_2$-$t_3$) eindeutig bestimmt ist. Reflektionen und Mehrwegeausbreitung werden in der Realität zu einer Abweichung von dieser idealen Hyperbel und damit zu einer verringerten Positionierungsgenauigkeit führen. Der gesuchte Ort der Femtobasisstation ergibt sich wie Fig. 2 gezeigt als Schnittpunkt aller drei Hyperbeln.

Die Steuer- und Kontroll-Instanz 20 überprüft, ob der den Messwerten der Femtobasisstation 10 entsprechende tatsächliche Aufstellungsort der Femtobasisstation 10 hinreichend genau mit einem geplanten Aufstellungsort (oder einem von mehreren zulässigen Aufstellungsorten) übereinstimmt. Wird bei diesem Vergleich festgestellt, dass sich die Femtobasisstation 10 am geplanten Aufstellungsort befindet, wird der Femtobasisstation 10 von der Steuer- und Kontrollinstanz 20 des Mobilfunkanbieters die Erlaubnis erteilt, als aktive Mobilfunkzelle zu agieren, indem der bereits oben erwähnte Freigabekode verschlüsselt an die Femtobasisstation 10 von der Steuer- und Kontrollinstanz 20 übertragen wird.

Erst nach Erhalt dieser Erlaubnis wird der aktive Funkteil der Femtobasisstation 10 eingeschaltet und die Femtozelle somit ein aktiver Teil der Mobilfunkversorgung. Ist die Quittung der Steuer- und Kontrollinstanz 20 des Mobilfunkanbieters negativ, bleibt diese Quittung aus oder kann die Femtobasisstation 10 keine geeigneten Funksender empfangen und damit keine Zeitunterschiede berechnen und an die Steuer- und Kontrollinstanz 20 übermitteln, kann die Femtobasisstation nicht aktiviert werden.

Um zu gewährleisten, dass eine aktive Femtobasisstation an ihrem vorgesehenen Ort verbleibt und nicht von dort fortbewegt werden kann, wird das beschriebene Verfahren zur Ortsüberprüfung in beliebigen Zeitabständen wiederholt. Beispielsweise kann eine Standortüberprüfung gemäß der vorliegenden Erfindung mehrmals täglich, stündlich oder beispielsweise alle 10 Minuten erfolgen. Beispielsweise kann der von der Steuer- und Kontrollinstanz 20 übermittelte Freigabekode eine zeitlich begrenzte Gültigkeit besitzen, so dass die Femtozelle 10 nach Ablauf der Gültigkeit des Freigabekodes erneut eine Standortüberprüfung nach dem erfindungsgemäßen Verfahren anstoßen muss, um einen neuen Freigabekode für die Aktivierung Ihres Funkteils zu erhalten. Denkbar ist auch, dass die Femtozelle eine Standortüberprüfung nach dem erfindungsgemäßen Verfahren in beliebigen Zeitabständen wiederholt, und bei einer zu großen Abweichung des ermittelten Standorts von dem oder den vorgesehenen Standort(en) für Femtozelle das Funkteil der Femtozelle automatisch von der Steuer- und Kontrollinstanz durch Übermittlung eines entsprechenden Deaktivierungskodes abgeschaltet wird.

Die Genauigkeit des erfindungsgemäßen Verfahrens hängt vor allem davon ab, wie genau die Laufzeitdifferenzen $t_1$-$t_2$ bzw. $t_1$-$t_3$ bzw. $t_2$-$t_3$ gemessen werden können. Beträgt der Toleranzbereich dieser Messungen beispielsweise $\pm$ 0,5 $\mu$s, ergibt sich statt einer Hyperbel-Linie ein Hyperbel-Streifen von mindestens $3\cdot10^8$ m/s x 1$\mu$s = 300m (da Funksignale sich mit Lichtgeschwindigkeit, d.h. $3\cdot10^8$ m/s, ausbreiten). Mit zunehmendem Abstand von den Funksendern vergrößert sich diese Streifenbreite. Fig. 3 ist ein Ausschnitt aus Fig. 2 und zeigt die unterschiedliche Breite dieser Streifen.

Die Berechnung der Zeitunterschiede, $\Delta T_{12}, \Delta T_{12}', \Delta T_{13}, \Delta T_{13}', \Delta T_{23}$ und $\Delta T_{23}'$ kann anstatt in der Femtobasisstation 10 und Referenzempfänger 12 auch in der Steuer- und Kontrollinstanz 20 des Netzbetreibers erfolgen. In diesem Fall müssen die Femtobasisstation 10 und der Referenzempfänger 12 ihre lokalen Uhrzeiten, zu denen sie die von den Sendern 14,16 und 18 zu den Zeitpunkten $T_1$, $T_2$ und $T_3$ ausgestrahlten Signale empfangen haben, an die Steuer- und Kontrollinstanz 20 melden. Diese verfährt dann weiter wie oben beschrieben.

Es ist auch möglich, auf die Steuer- und Kontrollinstanz 20 zu verzichten, so dass die Femtozelle autonom ihr Funkteil aktivieren kann. Dazu werden die Messwerte des Referenzempfängers 12 an die zu verortende Femtobasisstation 10 gesendet, wie es in Fig. 1 durch die gestrichelte Linie angedeutet ist. Dann können alle oben beschriebenen Schritte nach dem erfindungsgemäßen Verfahren in der Femtobasisstation 10 durchgeführt werden. Bei dieser Implementierung darf die Femtobasisstation 10 ihren Funkteil nur dann aktivieren, wenn sie selbst feststellt, dass sie sich am geplanten (oder einem zulässigen) Aufstellungsort befindet. Das erfindungsgemäße Verfahren zum Verarbeiten der Messwerte und davon abhängigen Standortüberprüfung kann beispielsweise als Teil der Firmware der Femtozelle implementiert sein.

Als Referenzempfänger kann auch eine Femtobasisstation benutzt werden. Dazu kann diese Referenz-Femtobasisstation an einer bekannten Lokation, z.B. einer Makrobasisstation, montiert sein. Die Referenz-Femtobasisstation benutzt das gleiche Verfahren wie die zu verortende Femtobasisstation. Eine Aktivierung der Referenz-Femtobasisstation durch die Steuer- und Kontrollinstanz ist dafür jedoch nicht erforderlich.

Eine weitere Erhöhung der Genauigkeit der Standortüberprüfung ist möglich, wenn die Signale von mehr als drei Funksendern ausgewertet werden.

Das erfindungsgemäße Verfahren kann auch mit anderen Verfahren zur Standortbestimmung nach dem in der Einleitung beschriebenen Stand der Technik kombiniert werden. Beispielsweise könnte sich die Femtobasisstation zunächst an Makro-Zellen eines Mobilfunknetzes orientieren, sofern deren Empfang möglich ist, da diese zuverlässig eine hohe Ortsgenauigkeit sicherstellen. Ist kein Funksignal von einer Makrobasisstation zu empfangen, kann sich die Femtobasisstation beispielsweise an frei empfangbaren Rundfunksendern entsprechend dem hier beschriebenen Verfahren orientieren. Abschließend kann eine weitere Ortsbestimmung durch die Bestimmung des physikalischen Breitbandanschlusses erfolgen, an den die Femtobasisstation angeschlossen ist. Angesichts der vorherigen Ortsbestimmung anhand von Makrobasisstationen und anderen Funksendern ist die in der Einleitung beschriebene Manipulationsmöglichkeit für die Ortung mittels Breitbandanschluss wenig erfolgversprechend und damit unattraktiv. In einer Variante dieses kombinierten Verfahrens kann eine Femtobasisstation, die ihren eigenen Aufenthaltsort durch den Empfang von Funksignalen von einer oder mehreren Makrobasisstationen genügend genau bestimmen kann, zusätzlich als Referenzempfänger für die Ortsüberprüfung anderer Femtobasisstationen nach dem oben beschriebenen erfindungsgemäßen Verfahren dienen. Die Ortsbestimmung für diese Femtobasisstation selbst kann anhand der Makrobasisstationen erfolgen, und das Ergebnis wird der Steuer- und Kontrollinstanz mitgeteilt. Darüber hinaus kann diese Femtobasisstation auch die Identitäten und Zeitunterschiede der für sie empfangbaren Rundfunk- oder Fernsehsender bestimmen und diese Daten ebenfalls der Steuer- und Kontrollinstanz melden. Diese Zeitunterschiede können in Verbindung mit dem bekannten Ort der Femtobasisstation von der Steuer- und Kontrollinstanz als Referenz für die Ortsüberprüfung anderer Femtobasisstationen verwendet werden. Auf diese Weise können Femtobasisstationen, die von Mobilfunkkunden betrieben werden, zugleich als Referenzempfänger dienen, und der Mobilfunknetzbetreiber kann auf eigene Referenzempfänger oder Referenz-Femtobasisstationen verzichten.

Mit der Erfindung kann die Standortüberprüfung einer Femtozelle und insbesondere die Freigabe des Betriebs einer Femtozelle durch einen Mobilfunkanbieter verbessert werden, insbesondere in Bereichen, die mit Mobilfunk unterversorgt sind.

## Bezugszeichen

| | |
|---|---|
| 10 | Femtobasisstation bzw. Femtozelle |
| 12 | Referenzempfänger |
| 14, 16, 18 | Sender für Funksignale |
| 20 | Steuer- und Kontrollinstanz eines Mobilfunknetzes |

## Patentansprüche

1.  Verfahren zur Standortüberprüfung einer Femtozelle (10) mit den folgenden Schritten:

    Empfangen von Funksignalen (S1, S2, S3) von mindestens drei Sendern (14, 16, 18) mit bekannten Standorten jeweils durch die Femtozelle (10) und durch einen Referenzempfänger (12) mit bekanntem Standort,
    Ermitteln der Laufzeitdifferenzen der Funksignale von jeweils zwei der mindestens drei Sender anhand der Empfangszeitpunkte der durch die Femtozelle und den Referenzempfänger empfangenen Funksignale,
    Überprüfen des Standorts der Femtozelle abhängig von den ermittelten Laufzeitdifferenzen,
    Ermitteln, ob der Standort der Femtozelle einem oder mehreren geplanten Standorten der Femtozelle entspricht, und
    davon abhängig Aktivieren einer Mobilfunkversorgung durch die Femtozelle innerhalb des von der Femtozelle abgedeckten Bereichs,
    wobei
    jeder der mindestens drei Sender (14, 16, 18) jeweils ein Rundfunksender oder ein Pilotfunksignalsender ist, der ein Pilotfunksignal zur Standortüberprüfung einer Femtozelle in einem Frequenzbereich abstrahlt, der außerhalb der für Mobilfunk genutzten Frequenzbereiche liegt,
    und wobei
    das Ermitteln der Laufzeitdifferenzen der Funksignale von jeweils zwei der mindestens drei Sender und das Überprüfen des Standorts der Femtozelle abhängig von den ermittelten Laufzeitdifferenzen durch eine Steuer- und Kontrollinstanz eines Mobilfunknetzes erfolgt, wobei anhand der Empfangszeitpunkte der durch die Femtozelle und den Referenzempfänger empfangenen Funksignale ermittelte Zeitunterschiede von der Femtozelle und vom Referenzempfänger für das Überprüfen des Standorts der Femtozelle an die Steuer- und Kontrollinstanz übermittelt werden und/oder die lokalen Empfangszeitpunkte von Funksignalen durch die Femtozelle und den Referenzempfänger an die Steuer- und Kontrollinstanz übermittelt werden.

2. Verfahren zur Standortüberprüfung einer Femtozelle (10) mit den folgenden Schritten:

Empfangen von Funksignalen (S1, S2, S3) von mindestens drei Sendern (14, 16,18) mit bekannten Standorten jeweils durch die Femtozelle (10) und durch einen Referenzempfänger (12) mit bekanntem Standort, Ermitteln der Laufzeitdifferenzen der Funksignale von jeweils zwei der mindestens drei Sender anhand der Empfangszeitpunkte der durch die Femtozelle und den Referenzempfänger empfangenen Funksignale, Überprüfen des Standorts der Femtozelle abhängig von den ermittelten Laufzeitdifferenzen, Ermitteln, ob der Standort der Femtozelle einem oder mehreren geplanten Standorten der Femtozelle entspricht, und

davon abhängig Aktivieren einer Mobilfunkversorgung durch die Femtozelle innerhalb des von der Femtozelle abgedeckten Bereichs, wobei

jeder der mindestens drei Sender (14, 16, 18) jeweils ein Rundfunksender oder ein Pilotfunksignalsender ist, der ein Pilotfunksignal zur Standortüberprüfung einer Femtozelle in einem Frequenzbereich abstrahlt, der außerhalb der für Mobilfunk genutzten Frequenzbereiche liegt, und wobei

das Ermitteln der Laufzeitdifferenzen der Funksignale von jeweils zwei der mindestens drei Sender und das Überprüfen des Standorts der Femtozelle abhängig von den ermittelten Laufzeitdifferenzen durch die Femtozelle erfolgt, wobei anhand der Empfangszeitpunkte der durch den Referenzempfänger empfangenen Funksignale ermittelte Zeitunterschiede vom Referenzempfänger für das Überprüfen des Standorts der Femtozelle an die Femtozelle übermittelt werden und/oder die vom Referenzempfänger ermittelten Empfangszeitpunkte der durch den Referenzempfänger empfangenen Funksignale für das Überprüfen des Standorts der Femtozelle an die Femtozelle übermittelt werden.

3. Verfahren nach Anspruch 1 oder 2,
**dadurch gekennzeichnet, dass**
das Ermitteln der Laufzeitdifferenzen der Funksignale von jeweils zwei der mindestens drei Sender folgende Schritte umfasst:

Ermitteln der Empfangszeitpunkte aller der durch die Femtozelle und den Referenzempfänger empfangenen Funksignale der mindestens drei Sender (S10; $T_{1e}$, $T_{2e}$, $T_{3e}$, $T_{1e}'$, $T_{2e}'$, $T_{3e}'$), Berechnen von Zeitunterschieden anhand der Empfangszeitpunkte (S12; $\Delta T_{12} = T_{1e} - T_{2e}$; $\Delta T_{13} = T_{1e} - T_{3e}$; $\Delta T_{23} = T_{2e} - T_{3e}$; $\Delta T_{12}' = T_{1e}' - T_{2e}'$; $\Delta T_{13}' = T_{1e}' - T_{3e}'$; $\Delta T_{23}' = T_{2e}' - T_{2e}'$) Berechnen von Zeitdifferenzen anhand der Zeitunterschiede (S14; $\Delta \tau_{12} = \Delta T_{12} - \Delta T_{12}'$; $\Delta \tau_{13} = \Delta T_{13} - \Delta T_{13}'$; $\Delta \tau_{23} = \Delta T_{23} - \Delta T_{23}'$), und Ermitteln der Laufzeitdifferenzen ($t_1$-$t_2$; $t_1$-$t_3$; $t_2$-$t_3$) der Funksignale der Funksender zur Femtozelle (10) anhand der Zeitdifferenzen (($t_1$-$t_2$) = $\Delta \tau_{12}$ +($t_1'$-$t_2'$); ($t_1$-$t_3$) = $\Delta \tau_{13}$ +($t_1'$-$t_3'$); ($t_2$-$t_3$) = $\Delta \tau_{23}$ +($t_2'$-$t_3'$)) und der anhand des bekannten Standorts des Referenzempfängers (12) und der bekannten Standorte der Sender der Funksignale ermittelten Signallaufzeiten ($t_1'$, $t_2'$, $t3'$) der Funksignale von den Funksendern zum Referenzempfänger (S16).

4. Verfahren nach Anspruch 3,
**dadurch gekennzeichnet, dass**
das Überprüfen des Standorts der Femtozelle abhängig von den ermittelten Laufzeitdifferenzen folgende Schritte umfasst:

Bilden von Zeitdifferenzen ($\Delta \tau_{12}$, $\Delta \tau_{13}$, $\Delta \tau_{23}$) anhand von Zeitunterschieden aus der Menge der ermittelten Zeitunterschiede ($\Delta T_{12}$, $\Delta T_{12}'$, $\Delta T_{13}$, $\Delta T_{13}'$, $\Delta T_{23}$, $\Delta T_{23}'$), wobei zwei zum Bilden einer Zeitdifferenz ($\Delta \tau_{12} = \Delta T_{12} - \Delta T_{12}'$; $\Delta \tau_{13} = \Delta T_{13} - \Delta T_{13}'$; $\Delta \tau_{23} = \Delta T_{23} - \Delta T_{23}'$) verwendete Zeitunterschiede die Zeitunterschiede der Empfangszeitpunkte der Funksignale sind, die von den gleichen zwei der mindestens drei Sender abgestrahlt und einmal durch die Femtozelle und einmal durch den Referenzempfänger empfangen wurden, Ermitteln eines einer gebildeten Zeitdifferenz ($\Delta T_{12}$, $\Delta \tau_{13}$, $\Delta T_{23}$) zugeordneten Abstandsbereichs zu den Sendern, deren Funksignale für das Bilden der Zeitdifferenz verwendet wurden, für jede gebildete Zeitdifferenz, wobei ein Abstandsbereich abhängig vom Toleranzbereich der Ermittlung der Laufzeitdifferenzen ermittelt wird, und Überprüfen des Standorts der Femtozelle anhand von den ermittelten Abstandsbereichen.

5. Verfahren nach Anspruch 4,
**dadurch gekennzeichnet, dass**

das Überprüfen des Standorts der Femtozelle anhand von den ermittelten Abstandsbereichen folgende Schritte aufweist:

Bestimmen eines Überschneidungsbereichs der ermittelten Abstandsbereiche als Bereich für mögliche Standorte der Femtozelle, und
Überprüfen des Standorts der Femtozelle anhand des Überschneidungsbereichs.

6. Verfahren nach einem der vorhergehenden Ansprüche,
**dadurch gekennzeichnet, dass**
es zyklisch wiederholt wird.

7. Verfahren nach einem der vorhergehenden Ansprüche,
**dadurch gekennzeichnet, dass**
der Referenzempfänger (12) durch eine Referenz-Femtozelle gebildet wird, deren Standort bekannt ist.

8. Verfahren nach Anspruch 7,
**dadurch gekennzeichnet, dass**
die Referenz-Femtozelle an einer Makrobasisstation eines Mobilfunknetzes lokalisiert ist, insbesondere an der Makrobasisstation montiert ist.

9. Femtozelle (10) mit Mitteln zur Durchführung der entsprechenden Schritte eines Verfahrens nach Anspruch 2 oder einem der abhängigen Ansprüche 3 bis 8 in Kombination mit Anspruch 2.

10. Steuer- und Kontrollinstanz (20) eines Mobilfunknetzes mit Mitteln zur Durchführung der entsprechenden Schritte eines Verfahrens nach Anspruch 1 oder einem der abhängigen Ansprüche 3 bis 8 in Kombination mit Anspruch 1, insbesondere zur Standortüberprüfung der Femtozelle und zum Übermitteln eines Freigabekodes für die Aktivierung des Funkteils der Femtozelle an die Femtozelle abhängig von der Standortüberprüfung.

**Claims**

1. A method for checking the location of a femtocell (10) with the following steps:

receiving radio signals (S1, S2, S3) from at least three transmitters (14, 16, 18) at known locations by the femtocell (10) and by a reference receiver (12) at a known location,
determining differences in delay of the radio signals from two of the at least three transmitters based on reception times of the radio signals received by the femtocell and the reference receiver;
checking the location of the femtocell based on the determined differences in delay, determining whether the location of the femtocell corresponds to one or more planned locations of the femtocell, and
depending therefrom, activating a provision of mobile communications by the femtocell within the area covered by the femtocell,
wherein each of the at least three transmitters (14, 16, 18) is respectively a broadcast transmitter or a pilot radio signal transmitter configured to broadcast a pilot radio signal for checking the location of a femtocell in a frequency range outside frequency ranges used for mobile communication, and wherein
the determining of the differences in delay of the radio signals from two of the at least three transmitters and the checking of the location of the femtocell based on the determined differences in delay are performed by a control and monitoring entity of a mobile communication network, wherein time differentials being determined based on the reception times of the radio signals received by the femtocell and the reference receiver are communicated by the femtocell and the reference receiver to the control and monitoring entity so as to check the location of the femtocell and/or the local reception times of the radio signals are communicated by the femtocell and the reference receiver to the control and monitoring entity.

2. A method for checking the location of a femtocell (10) with the following steps:

receiving radio signals (S1, S2, S3) from at least three transmitters (14, 16, 18) at known locations by the femtocell (10) and by a reference receiver (12) at a known location,
determining differences in delay of the radio signals from two of the at least three transmitters based on reception times of the radio signals received by the femtocell and the reference receiver;

checking the location of the femtocell based on the determined differences in delay,
determining whether the location of the femtocell corresponds to one or more planned locations of the femtocell, and
depending therefrom, activating a provision of mobile communications by the femtocell within the area covered by the femtocell,
wherein each of the at least three transmitters (14, 16, 18) is respectively a broadcast transmitter or a pilot radio signal transmitter configured to broadcast a pilot radio signal for checking the location of a femtocell in a frequency range outside frequency ranges used for mobile communication,
and wherein
the determining of the differences in delay of the radio signals from two of the at least three transmitters and the checking of the location of the femtocell based on the determined differences in delay are performed by the femtocell, wherein time differentials being determined based on the reception times of the radio signals received by the reference receiver are communicated by the reference receiver to the femtocell so as to check the location of the femtocell and/or reception times of the radio signals received by the reference receiver being determined by the reference receiver are communicated to the femtocell.

3. The method according to claim 1 or 2,
**characterized in that**
the determining of differences in delay of the radio signals of any two of the at least three transmitters comprises the following steps:

determining the reception times of all the radio signals from the at least three transmitters received by the femtocell and the reference receiver (S10; $T_{1e}$, $T_{2e}$, $T_{3e}$, $T_{1e}'$, $T_2e$, $T_{3e}'$);
calculating time differentials based on the reception times (S12; $\Delta T_{12} = T_{1e} - T_{2e}$; $\Delta T_{13} = T_{1e} - T_{3e}$; $\Delta T_{23} = T_{2e} - T_{3e}$; $\Delta T_{12}' = T_{1e}' - T_{2e}'$; $\Delta T_{13}' = T_{1e}' - T_{3e}'$; $\Delta T_{23}' = T_{2e}' - T_{2e}'$), calculating time differences based on the time differentials (S14; $\Delta\tau_{12} = \Delta T_{12} - \Delta T_{12}'$; $\Delta\tau_{13} = \Delta T_{13} - \Delta T_{13}$; $\Delta\tau_{23} = \Delta T_{23} - \Delta T_{23}'$), and
determining the differences in delay ($t_1$-$t_2$; $t_1$-$t_3$; $t_2$-$t_3$) of the radio signals from the radio transmitters to the femtocell (10) based on the time differences (($t_1$-$t_2$) = $\Delta\tau_{12}$ +($t_1$-$t_2'$);($t_1$-$t_3$) = = $\Delta\tau_{13}$ +($t_1'$-$t_3'$); ($t_2$-$t_3$) = $\Delta\tau_{23}$ +($t_2'$-$t_3'$)) and signal delays ($t_1'$, $t_2'$, $t_3'$) of the radio signals from the transmitters to the reference receiver, the signal delays being determined based on the known location of the reference receiver (12) and the known locations of the transmitters of the radio signals (S16).

4. The method according to claim 3,
**characterized in that**
the checking of the location of the femtocell based on the determined differences in delay comprises the following steps:

forming the time differences ($\Delta\tau_{12}$, $\Delta\tau_{13}$, $\Delta\tau_{23}$) based on time differentials from the set of calculated time differentials ($\Delta T_{12}$, $\Delta T_{12}'$, $\Delta T_{13}$, $\Delta T_{13}'$, $\Delta T_{23}$, $\Delta T_{23}'$), wherein two time differentials ($\Delta\tau_{12} = \Delta T_{12} - \Delta T_{12}'$; $\Delta\tau_{13} = \Delta T_{13} - \Delta T_{13}'$; $\Delta\tau_{23} = \Delta T_{23} - \Delta T_{23}'$) used for forming a time difference are the time differences of the reception times of the radio signals, which were broadcast be the same two of the at least three transmitters and received once by the femtocell and once by the reference receiver;
for each formed time difference, determining a distance range, associated with a formed time difference ($\Delta\tau_{12}$, $\Delta\tau_{13}$, $\Delta t_{23}$), to the transmitters, the radio signals of which were used to form the time difference, wherein a distance range is determined depending on the tolerance range of the determination of the differences in delay, and
checking the location of the femtocell based on the determined distance ranges.

5. The method according to claim 4,
**characterized in that**
the checking the location of the femtocell based on the determined distance ranges comprises the following steps:

determining an overlap area of the determined distance ranges as an area for possible locations of the femtocell, and
checking the location of the femtocell based on the overlap area.

6. The method according to any of the preceding claims,
**characterized in that**

it is cyclically repeated.

7. The method according to any of the preceding claims,
**characterized in that**
the reference receiver (12) is configured as a reference femtocell, the location of which is known.

8. The method according to claim 7,
**characterized in that**
the reference femtocell is located at a macro-base station of a mobile communication network, particularly mounted at the macro-base station.

9. A femtocell (10) with means for the execution of the respective steps of a method according to claim 2 or any of the dependent claims 3 to 8 in combination with claim 2.

10. A control and monitoring entity (20) of a mobile communication network with means for the execution of the respective steps of a method according to claim 1 or any of the dependent claims 3 to 8 in combination with claim 1, particularly for checking the location of the femtocell and, based on the checking of the location, for communicating to the femtocell an enabling code to activate a radio part of the femtocell.

**Revendications**

1. Procédé permettant de vérifier la localisation d'une femtocell (10), comportant les étapes suivantes :

   - réception de signaux radio (S1, S2, S3) d'au moins trois émetteurs (14, 16, 18) avec des localisations connues, respectivement par la femtocell (10) et par un récepteur de référence (12) avec une localisation connue ;
   - détermination des différences de temps de propagation des signaux radio de respectivement deux des au moins trois émetteurs à l'aide des instants de réception des signaux radio reçus par la femtocell et par le récepteur de référence ;
   - vérification de la localisation de la femtocell en fonction des différences de temps de propagation qui ont été déterminées,
   - détermination si la localisation de la femtocell correspond à une ou plusieurs localisations prévues de la femtocell et,
   - en fonction de cela, activation d'une desserte de téléphonie mobile par la femtocell dans les limites de la zone couverte par la femtocell,

   dans lequel chacun d'au moins trois émetteur (14, 16, 18) est à chaque fois un émetteur de radiodiffusion ou un émetteur de signaux radio pilotes qui émet un signal radio pilote pour vérifier la localisation d'une femtocell dans une gamme de fréquences qui se trouve en dehors des gammes de fréquences utilisées pour la radiotéléphonie mobile,
   et dans lequel
   la détermination des différences de temps de propagation des signaux radio de respectivement deux des au moins trois émetteurs et la vérification de la localisation de la femtocell en fonction des différences de temps de propagation qui ont été déterminées sont effectuées par une instance de commande et de contrôle d'un réseau de téléphonie mobile, des différences de temps déterminées à l'aide des instants de réception des signaux radio reçus par la femtocell et par le récepteur de référence étant transmises à l'instance de commande et de contrôle par la femtocell et par le récepteur de référence aux fins de la vérification de la localisation de la femtocell et/ou les instants de réception locaux de signaux radio étant transmis à l'instance de commande et de contrôle par la femtocell et par le récepteur de référence.

2. Procédé permettant de vérifier la localisation d'une femtocell (10), comportant les étapes suivantes :

   - réception de signaux radio (S1, S2, S3) d'au moins trois émetteurs (14, 16, 18) avec des localisations connues, respectivement par la femtocell (10) et par un récepteur de référence (12) avec une localisation connue ;
   - détermination des différences de temps de propagation des signaux radio de respectivement deux des au moins trois émetteurs à l'aide des instants de réception des signaux radio reçus par la femtocell et par le récepteur de référence ;
   - vérification de la localisation de la femtocell en fonction des différences de temps de propagation qui ont été déterminées,
- déterminer si la localisation de la femtocell correspond à une ou plusieurs localisations prévues de la femtocell et, en fonction de cela, activation d'une desserte de téléphonie mobile par la femtocell dans les limites de la zone couverte par la femtocell,

dans lequel chacun d'au moins trois émetteur (14, 16, 18) est à chaque fois un émetteur de radiodiffusion ou un émetteur de signaux radio pilotes qui émet un signal radio pilote pour vérifier la localisation d'une femtocell dans une gamme de fréquences qui se trouve en dehors des gammes de fréquences utilisées pour la radiotéléphonie mobile,
et dans lequel
la détermination des différences de temps de propagation des signaux radio de respectivement deux des au moins trois émetteurs et la vérification de la localisation de la femtocell en fonction des différences de temps de propagation qui ont été déterminées sont effectuées par la femtocell, des différences de temps déterminées à l'aide des instants de réception des signaux radio reçus par le récepteur de référence étant transmises à la femtocell par le récepteur de référence aux fins de la vérification de la localisation de la femtocell et/ou les instants de réception, déterminés par le récepteur de référence, des signaux radio reçus par le récepteur de référence étant transmis à la femtocell aux fins de la vérification de la localisation de la femtocell

3. Procédé selon la revendication 1 ou 2, **caractérisé en ce que** la détermination des différences de temps de propagation des signaux radio à partir de deux d'au moins trois émetteurs comprend les étapes suivantes :

   - détermination des instants de réception de tous les signaux radio d'au moins trois émetteurs reçus par la femtocell et par le récepteur de référence (S10; $T_{1e}$, $T_{2e}$, $T_{3e}$, $T_{1e}'$, $T_{2e}'$, $T_{3e}'$) ;
   - calcul de différences de temps à l'aide des instants de réception (S12; $\Delta T_{12} = T_{1e} - T_{2e}$ ; $\Delta T_{13} = T_{1e} - T_{3e}$ ; $\Delta T_{23} = T_{2e} - T_{3e}$; $\Delta T_{12}' = T_{1e}' - T_{2e}'$; $\Delta T_{13}' = T_{1e}' - T_{3e}'$; $\Delta T_{23}' = T_{2e}' - T_{2e}'$);
   - calcul de différences temporelles à l'aide des différences de temps (S14; $\Delta \tau_{12} = AT_{12} - \Delta T_{12}'$, $A \tau_{13} = AT_{13} - \Delta T_{13}'$; $\Delta \tau_{23} = \Delta T_{23} - \Delta T_{23}'$) et détermination des différences de temps de propagation ($t_1-t_2$; $t_1-t_3$; $t_2-t_3$) des signaux radio des émetteurs radio vers la femtocell (10) à l'aide des différences temporelles ($(t_1-t_2) = \Delta \tau_{12} +(t_1'-t_2')$;$(t_1-t_3) = = \Delta \tau_{13} +(t_1'-t_3')$; $(t_2-t_3) = \Delta \tau_{23} +(t_2'-t_3')$) et des temps de propagation ($t_1'$, $t_2'$, $t_3'$) des signaux radio des émetteurs radio vers le récepteur de référence (16), lesquels temps de propagation sont déterminés à l'aide de la localisation connue du récepteur de référence (12) et des localisations connues des émetteurs des signaux radio.

4. Procédé selon la revendication 3, **caractérisé en ce que** la vérification de la localisation de la femtocell comprend, en fonction des différences de temps de propagation qui ont été déterminées, les étapes suivantes :

   - formation de différences temporelles ($\Delta \tau_{12}$, $\Delta \tau_{13}$, $\Delta \tau_{23}$) à l'aide de différences de temps tirées de l'ensemble des différences de temps ($\Delta T_{12}$, $\Delta T_{12}'$, $\Delta T_{13}$, $\Delta T_{13}'$, $\Delta T_{23}$, $\Delta T_{23}'$) qui ont été déterminées, deux différences de temps utilisées pour former une différence temporelle ($\Delta \tau_{12} = \Delta T_{12} - \Delta T_{12}'$; $\Delta \tau_{13} = \Delta T_{13} - \Delta T_{13}'$; $\Delta \tau_{23} = \Delta T_{23} - \Delta T_{23}'$) étant les différences de temps des instants de réception des signaux radio qui ont été émis par les deux mêmes des au moins trois émetteurs et ont été reçus d'une part par la femtocell et d'autre part par le récepteur de référence ;
   - détermination, pour chaque différence temporelle formée ($\Delta T_{12}$, $\Delta \tau_{13}$, $\Delta \tau_{23}$), d'une zone de distance, associée à une différence temporelle formée, par rapport aux émetteurs dont les signaux radio ont été utilisés pour former la différence temporelle ; dans lequel une zone de distance est déterminée en fonction de la zone de tolérance de la détermination des différences de temps de propagation, et
   - vérification de la localisation de la femtocell à l'aide des zones de distance qui ont été déterminées.

5. Procédé selon la revendication 4, **caractérisé en ce que** la vérification de la localisation de la femtocell à l'aide des zones de distance qui ont été déterminées comporte les étapes suivantes :

   - détermination d'une zone de chevauchement des zones de distance qui ont été déterminées en tant que zone de localisations possibles de la femtocell et
   - vérification de la localisation de la femtocell à l'aide de la zone de chevauchement.

6. Procédé selon l'une des revendications précédentes, **caractérisé en ce qu'**il se répète cycliquement.

7. Procédé selon l'une des revendications précédentes, **caractérisé en ce que** le récepteur de référence (12) est constitué par une femtocell de référence dont la localisation est connue.

8. Procédé selon la revendication 7, **caractérisé en ce que** la femtocell de référence est localisée au niveau d'une macrostation de base d'un réseau de téléphonie mobile, et est plus particulièrement montée sur la macrostation de base.

9. Femtocell (10) réalisée avec des moyens pour exécuter les étapes correspondantes d'un procédé selon la revendication 2 ou l'une des revendications dépendantes 3 à 8 en combinaison avec la revendication 2.

10. Instance de commande et de contrôle (20) d'un réseau de téléphonie mobile avec des moyens pour exécuter les étapes correspondants d'un procédé selon la revendication 1 ou l'une des revendications dépendantes 3 à 8 en combinaison avec la revendication 1, réalisée plus particulièrement pour vérifier la localisation de la femtocell et pour transmettre un code de déblocage pour l'activation du composant radio de la femtocell à la femtocell en fonction de la vérification de la localisation.

Fig. 1

Fig. 2

Fig. 3

START

S10

Ermitteln der Empfangszeitpunkte der durch die
Femtozelle und den Referenzempfänger
empfangenen Funksignale

S12

Berechnen von Zeitunterschieden anhand der
Empfangszeitpunkte

S14

Berechnen von Zeitdifferenzen anhand der
Zeitunterschiede

S16

Ermitteln der Laufzeitdifferenzen der
Funksignale der Funksender zur Femtozelle
anhand der Zeitdifferenzen und der
Signallaufzeiten der Funksignale von den
Funksendern zum Referenzempfänger

STOP

Fig. 4

**IN DER BESCHREIBUNG AUFGEFÜHRTE DOKUMENTE**

**In der Beschreibung aufgeführte Patentdokumente**

- DE 10314169 A1
- US 2009092096 A1
- US 5758288 A
- US 2009322603 A1
- EP 0652660 B1